# EUROPÄISCHE PATENTSCHRIFT

(11) **EP 0 966 824 B1**
(45) Veröffentlichungstag und Bekanntmachung des Hinweises auf die Patenterteilung: **11.04.2001**
(21) Anmeldenummer: 98946340.1
(22) Anmeldetag: 14.08.1998
(51) Int. Cl.: H04L 29/06

(54) **VERFAHREN ZUM DATENTRANSPORT SOWIE RECHNERNETZWERK ZUR DURCHFÜHRUNG DES VERFAHRENS**
METHOD FOR TRANSPORTING DATA AND COMPUTER NETWORK FOR CARRYING OUT SAID METHOD
PROCEDE DE TRANSPORT DE DONNEES ET RESEAU INFORMATIQUE POUR METTRE LEDIT PROCEDE EN OEUVRE

(30) Priorität: 09.01.1998 DE 19800372
(43) Veröffentlichungstag der Anmeldung: 29.12.1999
(73) Patentinhaber: Hilf GmbH, 82041 München (DE)
(72) Erfinder: NIERATSCHKER, Karl, D-85293 Reichertshausen (DE)
(74) Vertreter: Kitzhofer, Thomas, Dipl.-Ing.
(86) Internationale Anmeldenummer: EP9805173
(87) Internationale Veröffentlichungsnummer: WO9935797

(56) Entgegenhaltungen:
- ZHANG L: "WHY TCP TIMERS DON'T WORK WELL" COMPUTER COMMUNICATIONS REVIEW, Bd. 16, Nr. 3, 5. August 1986, Seiten 397-405, XP000743153

## Beschreibung

Die Erfindung betrifft ein Verfahren zum Datentransport zwischen Anwendungsprogrammen, die verschiedenen miteinander verbundenen Rechnern eines Rechnernetzwerks zugeordnet sind. Die Erfindung betrifft ferner ein Rechnernetzwerk zur Durchführung des Verfahrens.

Zu den bisherigen Verfahren dieser Art gehören die zwischen der Datenverarbeitungsschicht (oder Anwendungsprogrammschicht) und der Netzzugangsprotokollschicht (z.B. Ethernet oder Token Ring) liegenden und jeweils auf dem Internetprotokoll IP aufbauenden Transportprotokolle TCP (transmission control protocol) und UDP (user datagram protocol), die im folgenden als TCP/IP bzw. UDP/IP bezeichnet werden. In der Regel sind die beiden Protokolle nebeneinander auf einem Netzwerksystem implementiert.

Sowohl TCP/IP als auch UDP/IP besitzen verschiedene Nachteile, wenn es um die Realisierung eines echtzeitorientierten Netzwerksystems geht.

Bei einem solchen System sind mehrere echtzeitorientiert arbeitende Rechner miteinander verbunden, die mit speziellen Echtzeit-Betriebssystemen arbeiten, deren Systemfunktionen ein bekanntes Laufzeitverhalten haben. Echtzeitorientiert bedeutet, daß die Rechner jeweils in der Lage sind, auf ein eintreffendes Signal innerhalb eines vorherbestimmten, meist äußerst kurzen Zeitraums zu reagieren.

Wenn die verschiedenen Rechner des Netzwerks zusammen eine Gesamtaufgabe zu lösen haben, ist zur Lösung dieser Aufgabe natürlich ein umfangreicher Datenverkehr zwischen den Rechnern erforderlich, wobei es notwendig ist, auch den Datenaustausch zwischen zwei echtzeitorientiert arbeitenden Rechnern selbst echtzeitorientiert zu gestalten, um die Gesamtaufgabe echtzeitorientiert, d.h. mit einem genau determinierten Zeitverhalten, zu lösen. Zudem muß sichergestellt werden, daß die Datenübertragung zwischen zwei Rechnern des echtzeitorientierten Netzwerks absolut sicher und zuverlässig verläuft. Dazu beschreibt die Druckschrift Zhang L,: "Why TCP Timers Don't Work Well", Computer Communications Review, Bd. 16, Nr. 3, 5, 8, 86, S. 397-405 die Anwendung von RetransmissionsTimern in TCP Systemen.

TCP/IP qarantiert zwar eine sichere Datenübertragung, wurde jedoch nicht für Echtzeitnetzwerksysteme entwickelt und berücksichtigt deshalb einige Aspekte nicht, die für das stabile Verhalten solcher Systeme unerläßlich sind. Von besonderer Bedeutung ist, daß hierbei nicht rechtzeitig erkannt wird, wenn Verbindungen abreißen bzw. Rechnerkomponenten ausfallen, oder wenn Datenpakete nicht rechtzeitig empfanger und deshalb zu spät verarbeitet werden. Zudem kann nicht sichergestellt werden, daß die von einem Rechner zu einem anderen Rechner gesendeten Daten innerhalb eines durch die Vorgaben des Echtzeitsystems bedingten Zeitfensters ankommen.

Da TCP/IP verbindungsorientiert arbeitet, müssen viele Sockets (die Kommunikations-Endpunkte in einer Netzwerkeinrichtung; ein Socket setzt sich aus einer Rechner- und eines Portnummer zusammen) verwaltet werden, wenn alle Rechner eines verteilten Systems miteinander kommunizieren, was sich ebenfalls negativ auf das Laufzeitverhalten auswirkt. Das Wiedereingliedern eines ausgefallenen Rechners ist schwierig und zeitaufwendig; da alle Verbindungen sowohl von Sender- als auch von Empfängerseite neu aufgebaut werden müssen.

UDP/IP arbeitet wesentlich schneller als TCP/IP, da es ein verbindungslos arbeitendes Datagramm-Protokoll ist. Mit UDP/IP ist es möglich, von einem gegebenen Socket eines Quellrechners zu einem Socket eines beliebigen Zielrechners des Netzwerksystems Daten zu schicken, ohne daß vorher eine Verbindung aufgebaut werden müßte. In bezug auf die Geschwindigkeit des Datenaustausches ist UDP/IP daher prinzipiell für ein verteiltes Netzwerksystem besser geeignet als TCP/IP. Es arbeitet im Gegensatz zu TCP/IP außerdem Message-orientiert. D.h., daß bei jedem Lesevorgang von einem Socket genau eine Nachricht geliefert wird.

Trotz der Vorteile von UDP/IP gegenüber TCP/IP eignet es sich nicht für das oben beschriebene verteilte Echtzeitsystem aus mehreren echtzeitorientiert arbeitenden Rechnern, da es keine sichere Datenübertragung liefert. Zwar kommt unter optimalen Bedingungen ein von einem Anwendungsprogramm des Quellrechners aus gesendetes UDP-Datenpaket auch beim gewünschten Anwendungsprogramm des Zielrechners an. Allerdings kann es auch aus verschiedenen Gründen am Ankommen gehindert werden. Z.B. könnte das empfangende Programm noch nicht dazu gekommen sein, den Empfangssocket zu erzeugen, wenn bereits das erste Datenpaket eintrifft. Oder der Empfangspuffer des Empfangssockets könnte voll sein, wenn neue Daten ankommen. In diesen Fällen wird das Paket verworfen. Wie bereits erwähnt, benutzt UDP zum Transport der Daten von Rechner zu Rechner das IP-Protokoll. Auch auf dieser Protokollebene kann das Paket verlorengehen, z.B. aufgrund fehlender Routing-Informationen in einem Router/Gateway. Das Schicken von Datenpaketen mittels UDP kann man mit dem Schicken von Ansichtskarten mit der Post vergleichen. Das Ankommen der Ansichtskarte wird nicht garantiert, auch wenn dieses in den meisten Fällen funktioniert. Geht allerdings eine Karte verloren, dann erfährt weder der Sender noch der Empfänger etwas davon. So gibt es auch bei UDP keine Meldungen an das Anwenderprogramm über verlorengegangene Datenpakete. Diese Unzuverlässigkeit führt dazu, daß UDP nicht unmittelbar für den Datentransfer in Echtzeitsystemen eingesetzt werden kann.

Die Aufgabe der Erfindung besteht darin, die oben erwähnten Probleme der bisherigen Verfahren TCP/IP und UDP/IP zu überwinden und ein Verfahren zum Datentransport zwischen verschiedenen Rechnern eines Netzwerks zugeordneten Anwendungsprogrammen zu schaffen, das sich für die oben beschriebenen verteilten Echtzeitsysteme eignet. Darüber hinaus soll ein Rechnernetzwerk mit entsprechenden Eigenschaften zur Durchführung des Verfahrens geschaffen werden.

Diese Aufgabe wird durch ein Verfahren zum Datentransport zwischen Anwendungsprogrammen gelöst, die verschiedenen miteinander verbundenen Rechnern eines Rechnernetzwerks zugeordnet sind, wobei das Verfahren auf einem verbindungslosen und paketorientierten Transportverfahren, das Datenpakete zwischen beliebigen Rechnern des Netzwerks zugeordneten Anwendungsprogrammen transportieren kann, aufbaut und bei dem Verfahren
- beim Senden eines Datenpakets vom Anwendungsprogramm eines Quellrechners zum Anwendungsprogramm eines Zielrechners im Quellrechner ein nach einer vorherbestimmten Retransmissionszeit ablaufender Retransmissionstimer und ein nach einer vorherbestimmten Quittierungswartezeit ablaufender Quittierungstimer gestartet werden;
- nach dem ersten Empfang des Datenpakets vom Zielrechner das Paket an das Anwendungsprogramm des Zielrechners übergeben wird;
- nach jedem Empfang des Datenpakets vom Zielrechner ein den Empfang bestätigendes Quittungspaket zum Quellrechner gesendet wird;
- immer dann, wenn der Empfang des Quittungspakets nach Ablauf der vorherbestimmten Retransmissionswartezeit nicht vom Quellrechner registriert worden ist, das Datenpaket erneut zum Zielrechner gesendet und der Retransmissionstimer erneut gestartet wird;
- dann, wenn der Empfang des Quittungspakets nach Ablauf der vorherbestimmten Quittierungswartezeit im Quellrechner nicht registriert worden ist, das Anwendungsprogramm des Quellrechners informiert wird, daß der Empfang des ausgesendeten Datenpakets nicht innerhalb der Quittierungswartezeit quittiert wurde; und
- dann, wenn der Empfang eines Quittungspakets innerhalb der vorherbestimmten Quittierungswartezeit im Quellrechner zum ersten Mal registriert wird, das Anwendungsprogramm des Quellrechners informiert wird, daß das Datenpaket innerhalb der Quittierungswartezeit quittiert wurde.

Das Rechnernetzwerk zur Durchführung des Verfahrens besteht aus verschiedenen miteinander verbundenen Rechnern eines Rechnernetzwerks, die über ein verbindungsloses und paketorientiertes Transportverfahren Datenpakete zwischen beliebigen Rechnern des Netzwerks zugeordneten Anwendungsprogrammen austauschen können und bei dem jeder Rechner
- Retransmissionswartezeitüberwachungsmittel, die dann, wenn der Rechner als Quellrechner fungiert, beim Senden eines Datenpakets vom Anwendungsprogramm des Rechners zum Anwendungsprogramm eines als Zielrechner fungierenden anderen Rechners des Netzwerks gestartet werden können, wobei sie dann die seit dem Senden des Datenpakets verstrichene Zeit messen und nach einer vorherbestimmten Retransmissionswartezeit ablaufen;
- Quittierungswartezeitüberwachungsmittel, die dann, wenn der Rechner als Quellrechner fungiert, beim Senden eines Datenpakets vom Anwendungsprogramm des Rechners zum Anwendungsprogramm eines als Zielrechners fungierenden anderen Rechners des Netzwerks gestartet werden können, wobei sie dann die seit dem erstmaligen Senden des Datenpakets verstrichene Zeit messen und nach einer vorherbestimmten Quittierungswartezeit ablaufen;
- Mittel, die dann, wenn der Rechner als Zielrechner fungiert, nach dem ersten Empfang eines Datenpakets das Paket an das Anwendungsprogramm des Rechners übergeben können;
- Mittel, die dann, wenn der Rechner als Zielrechner fungiert, nach jedem Empfang eines Datenpakets ein den Empfang bestätigendes Quittungspaket zum Quellrechner senden können, der das Datenpaket ausgesendet hat;
- Mittel, die dann, wenn der Rechner als Quellrechner fungiert und der Empfang des Quittungspakets nach Ablauf der vorherbestimmten Retransmissionswartezeit nicht vom Rechner registriert worden ist, das Aussenden des Datenpakets zum Zielrechner und die Retransmissionswartezeitüberwachungsmittel erneut starten können; und
- Mittel umfaßt, die dann, wenn der Rechner als Quellrechner fungiert und der Empfang des Quittungspakets nach Ablauf der vorherbestimmten Quittierungswartezeit im Rechner nicht registriert worden ist, das Anwendungsprogramm des Rechners informieren können, daß der Empfang des ausgesendeten Datenpakets nicht innerhalb der Quittierungswartezeit quittiert wurde, und die dann, wenn der Empfang eines Quittungspakets innerhalb der vorherbestimmten Quittierungswartezeit im Rechner zum ersten Mal registriert wird, das Anwendungsprogramm des Rechners informieren können, daß das Datenpaket innerhalb der Quittierungswartezeit quittiert wurde.

Die Wirkung des erfindungsgemäßen Verfahrens beruht darauf, daß ein schnelles paketorientiertes verbindungsloses Standardverfahren zum Datentransport zwischen den Anwendungsprogrammen verschiedener Rechner eines Netzwerks, z.B. UDP/IP, um die für verteilte Echtzeitsysteme wichtigen Funktionen der Erkennung des Verlusts von gesendeten Datenpaketen und des zu späten Eintreffens von Datenpaketen ergänzt wird.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigen:
- Fig. 1: ein Schichtenmodell der verschiedenen zum Transport von Datenpaketen zwischen Anwendungsprogrammen, die auf verschiedenen Rechnern eines Netzwerks laufen, notwendigen Verfahren (Protokolle), das zeigt, wo das erfindungsgemäße Verfahren innerhalb des Schichtenmodells einzuordnen ist;
- Fig. 2 bis 5: verschiedene Zeitablaufdiagramme, die zeigen, wie das erfindungsgemäße Verfahren den Datentransport zwischen den auf verschiedenen Rechnern eines Netzwerks laufenden Anwendungsprogrammen in Fällen erfolgreicher und gestörter Übertragung steuert und sicherstellt; und
- Fig. 6: in einem Blockschaltbild die Elemente, die die Rechner aufweisen, die das Rechnernetzwerk zur Durchführung des erfindungsgemäßen Verfahrens bilden.

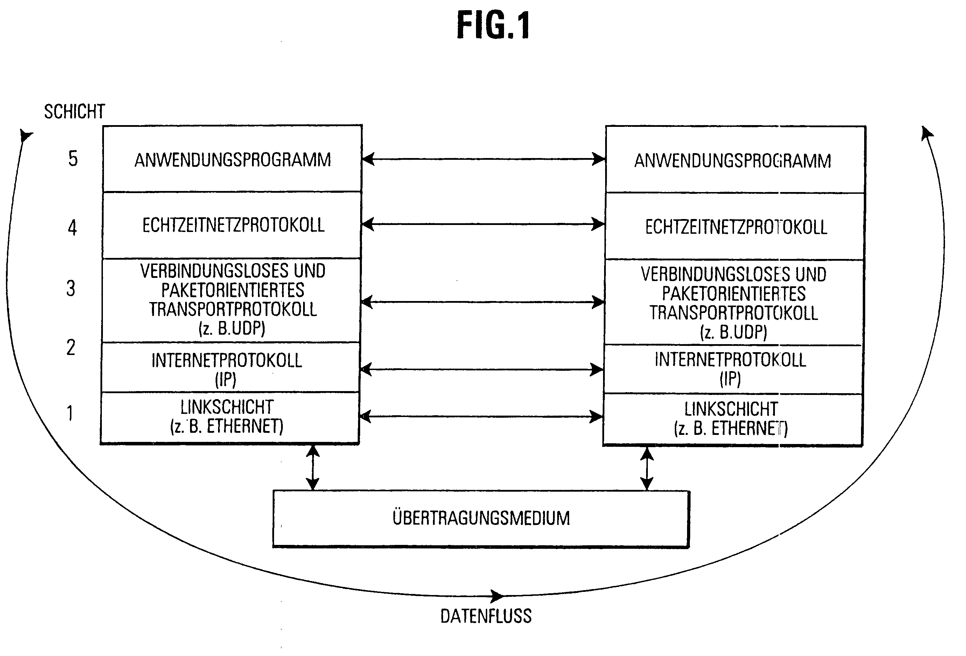

Fig. 1 zeigt in einem sogenannten Schichtenmodell, wie die Kommunikation zwischen zwei Rechnern (Rechner 1 und Rechner 2) eines Netzwerks gemäß der Erfindung prinzipiell organisiert ist.

Das Modell umfaßt fünf Schichten, von denen jeweils zwei gleiche Schichten in verschiedenen Rechnern miteinander kommunizieren, also z.B. das Anwendungsprogramm des Rechners 1 mit dem Anwendungsprogramm des Rechners 2 oder das Internetprotokoll des Rechners 1 mit dem Internetprotokoll des Rechners 2. Das ist auch durch die Pfeile zwischen den Schichtenblöcken der beiden Rechner angedeutet. Der Datenfluß zwischen zwei gleichnamigen Schichten erfolgt dabei stets über alle unter diesen Schichten angeordneten Schichten des Schichtenstapels und das Übertragungsmedium. Zwei übereinanderliegende Schichten, also z.B. die Echtzeitnetzprotokollschicht und die Transportprotokollschicht, sind jeweils über eine Schnittstelle miteinander verbunden, über die die Daten zwischen den Schichten ausgetauscht werden können.

Auf der obersten Schicht stehen die Anwendungsprogramme. Darunter befinden sich eigentlich noch die Betriebssysteme der einzelnen Rechner, die jedoch aus Gründen der Übersichtlichkeit weggelassen wurden. Bei einem verteilten Echtzeitsystem werden dabei die einzelnen Rechner mit speziellen echtzeitorientierten Betriebssystemen ausgestattet sein.

Unterhalb der Anwendungsprogramme findet sich die "Echtzeitnetzprotokollschicht", in der das erfindungsgemäße Verfahren realisiert ist. Das "Echtzeitnetzprotokoll" schafft ein Verfahren für einen echtzeitorientierten Datenverkehr zwischen den auf verschiedenen Rechnern eines Netzwerks laufenden Anwendungsprogrammen, indem es den Datenverkehr absichert und zeitlich kontrolliert. Seine weiteren Funktionen sind unten im einzelnen erläutert.

Unterhalb des Echtzeitnetzprotokolls befindet sich ein Transportprotokoll. Dieses ist im Prinzip ein Verfahren, das Datenpakete zwischen beliebigen Anwendungsprogrammen transportieren kann. Es handelt sich hierbei um ein sogenanntes verbindungsloses und paketorientiertes Transportprotokoll, welches beispielsweise durch das bereits in der Einleitung beschriebene Transportprotokoll UDP dargestellt werden kann. Es kann aber auch aus einem Netzprotokoll alleine, z.B. aus dem Internetprotokoll IP (ohne UDP) bestehen. Verbindungslos bedeutet, daß zwischen den jeweiligen Teilnehmern keine Verbindung geschaltet wird bzw. nach dem eigentlichen Datenaustausch wieder abgebaut wird. Bei einem Verbindungsaufbau würden nämlich Datenpakete ausgetauscht, die keine Nutzdaten, sondern lediglich Informationen über die Sende- und Empfangsbereitschaft enthalten, was den eigentlichen Datenaustausch verzögert. Dieses wirkt sich insbesondere bei verteilten Echtzeitsystemen störend aus, da bei diesen Systemen der Datenaustausch zwischen zwei Rechnern in einer vorherbestimmten meist sehr kurzen Zeitspanne abgewickelt sein muß.

Paketorientiert heißt, daß die Datenpakete so wie sie sind verschickt werden und nicht in einzelne Stücke zergliedert werden, wie das z.B. bei dem Transportprotokoll TCP passiert. Bei einem verbindungslosen und paketorientierten Protokoll wie UDP wird die Ablieferung eines Datenpakets, das auch als Datagramm bezeichnet wird, nicht garantiert. Ferner sind keine Vorkehrungen gegen eine Duplizierung oder eine Reihenfolgevertauschung getroffen, d.h. daß die abgesendeten Pakete entweder überhaupt nicht, in doppelter Form, oder in einer Reihenfolge beim Empfänger eintreffen können, die von der Sendereihenfolge abweicht.

Unterhalb des Transportprotokolls UDP, das die dritte Schicht des in der Fig. 1 dargestellten Schichtenmodells bildet, liegt auf der zweiten Schicht das bekannte Internetprotokoll IP, das im Gegensatz zu UDP nicht für die Übertragung von Daten zwischen zwei Programmen, sondern für die Übertragung zwischen zwei Rechnern verantwortlich ist.

Das Internetprotokoll IP ist mit der sogenannten Linkschicht (Schicht 1) verbunden, die den Zugang zum Übertragungsmedium liefert und z.B. aus einem Ethernet-Netztreiber mit entsprechender Hardware bestehen kann.

Das Übertragungsmedium besteht aus der physikalischen Verbindung (z.B. Kabel, etc.) der Rechner und den sonstigen für die Übertragung wichtigen nachrichtentechnischen Vorrichtungen und Verfahren. Es kann auch verschiedene Router/Gateways umfassen.

Wenn Datenpakete von einem Anwendungsprogramm des Rechners 1 zu einem Anwendungsprogramm des Rechners 2 geschickt werden, läuft der Datenfluß vom Anwendungsprogramm des Rechners 1 über die Schichtenfolge 4-3-2-1 des Rechners 1, das Übertragungsmedium und die Schichtenfolge 1-2-3-4 zum Anwendungsprogramm des Rechners 2.

Da die hinter den Schichten 1, 2 und 3 stehenden Verfahren bekannt sind, wird im folgenden nur die Arbeitsweise der Schicht 4, in der das erfindungsgemäße Verfahren implementiert ist, erläutert, wobei lediglich eine bevorzugte Ausführungsform dargestellt wird.

Vor dem Senden eines Datenpakets von einem auf einem ersten, im folgenden als Quellrechner bezeichneten Rechner des Netzwerks laufenden Anwendungsprogramm zu einem auf einem zweiten, im folgenden als Zielrechner bezeichneten Rechner des Netzwerks laufenden Anwendungsprogramm gibt das Anwendungsprogramm des Quellrechners die Adresse des Zielrechners, die Länge des Datenpakets und die Adresse eines bestimmten Sendedatenpufferbereichs an, in dem die zu sendende Information steht.

Gleichzeitig werden vom Anwendungsprogramm zwei Zeitvorgabewerte, nämlich eine Retransmissionswartezeit Δt_{RT} und eine Quittierungswartezeit Δt_{QT}, angegeben, die für jedes zu sendende Datenpaket individuell gewählt werden können.

Die Quittierungswartezeit Δt_{QT} bestimmt, nach welcher Zeit das gesendete Datenpaket als nicht angenommen betrachtet werden soll, während die Retransmissionswartezeit Δt_{RT}, die kleiner als Δt_{QT} ist, festlegt, nach welcher Zeit das Datenpaket jeweils erneut gesendet werden soll. Δt_{QT} und Δt_{RT} können in Basiszeiteinheiten ausgedrückt werden. Dabei kann als Basiszeiteinheit die Periode des Systemtakts des Quellrechners gewählt werden. Es kann jedoch auch eine vom Systemtakt unabhängige Basiszeiteinheit gewählt werden, die z.B. durch einen vom Systemtakt unabhängigen zusätzlichen Zeitgeber definiert wird.

Beim Senden werden vom Echtzeitnetzprotokoll zur zeitlichen Überwachung des Paketflusses ein Retransmissionstimer und ein Quittungstimer angelegt, die beim Senden gestartet werden. Es handelt sich bei dem Retransmissiontimer und dem Quittungstimer um Software-Timer. Der Retransmissionstimer wird jeweils nach Ablauf der vorherbestimmten Retransmissionswartezeit Δt_{RT} gestoppt, woraufhin er erneut gestartet wird und das Datenpaket erneut gesendet wird. Der Quittierungstimer wird nach Ablauf der vorherbestimmten Quittierungswartezeit Δt_{QT} gestoppt und freigegeben, wobei dann auch der Retransmissiontimer freigegeben wird.

Vorzugsweise wird beim Senden der Inhalt des Sendedatenpufferbereichs nicht kopiert, was Geschwindigkeitsvorteile insbesondere bei verteilten Echtzeitsystemen bietet. Die Adresse des Sendedatenpufferbereichs wird über das Echtzeitnetzprotokoll direkt an das Transportprotokoll (z.B. UDP) weitergegeben. Das Echtzeitnetzprotokoll merkt sich jedoch die Adresse des Bereichs, um sie gegebenenfalls zur erneuten Sendung des Datenpakets verwenden zu können. Das aufrufende Anwendungsprogramm darf den Sendedatenpufferbereich bis zur erfolgreichen Übertragung des Datenpakets dann zunächst nicht mehr verwenden.

Das Senden erfolgt vorzugsweise asynchron zum Ablauf des Anwendungsprogramms des Quellrechners. Bei einem synchronen Senden würde das sendende Anwendungsprogramm so lange im Sendeaufruf angehalten, bis die Datenübertragung vollständig beendet ist, d.h., bis die Daten vom Zielrechner quittiert worden sind. Dieses Verhalten ist jedoch insbesondere in Echtzeitsystemen nicht wünschenswert, da das Anwendungsprogramm die Wartezeit für andere Aufgaben nutzen kann.

Das Echtzeitnetzprotokoll des Quellrechners verwendet die Schnittstelle zum Transportprotokoll, die bei UDP als "Port" bezeichnet wird, über die dann die Daten über die Schichten 3-2-1 des Quellrechners, das Übertragungsmedium und die Schichten 1-2-3 des Zielrechners über die Schnittstelle zwischen Transportprotokoll und Echtzeitnetzprotokoll des Zielrechners zum Echtzeitnetzprotokoll und über dieses zum Anwendungsprogramm des Zielrechners gelangen. Wie die Daten zwischen den sogenannten UDP-Ports transportiert werden, ist bekannt und wird daher nicht näher erläutert.

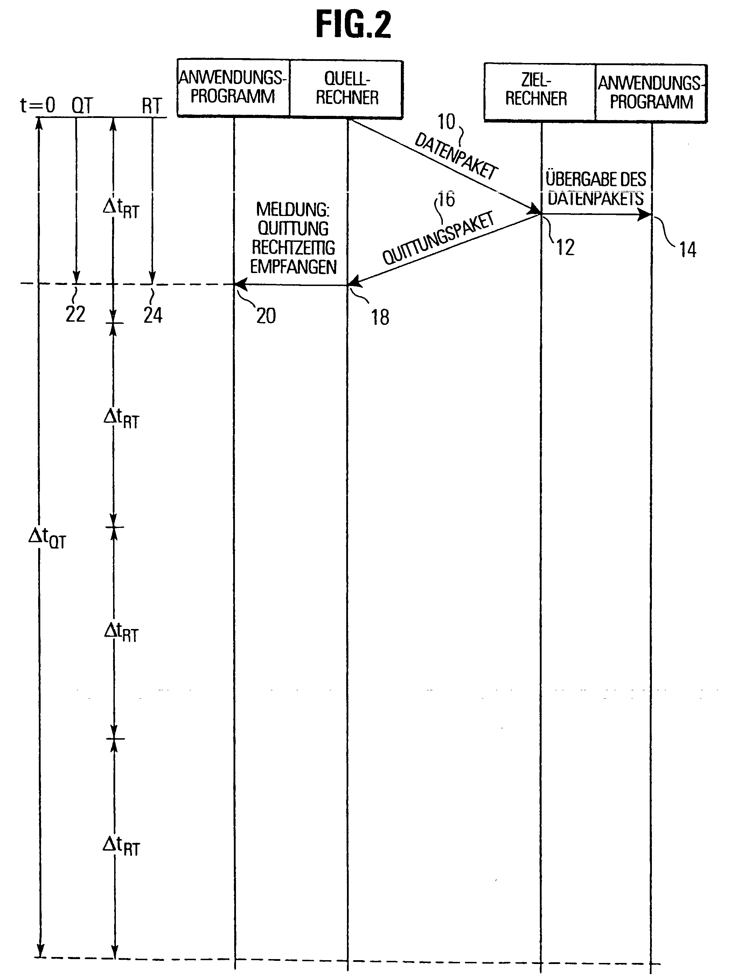

Wie sich das erfindungsgemäße Verfahren nach dem Senden eines Datenpakets vom Anwendungsprogramm des Quellrechners zum Anwendungsprogramm des Zielrechners zeitlich gestaltet, wird im folgenden anhand der Fig. 2-5 erläutert, die einige Standardfälle zeigen, die bei dem Verfahren auftreten können.

Dabei sind links in den Fig. 2-5 jeweils die beiden Timer dargestellt, wobei "QT" für Quittierungstimer und "RT" für Retransmissionstimer steht. Auf der von links gesehen ersten Achse der Fig. 2-5 ist die Quittierungswartezeit △t_{QT} markiert, wobei die danebenliegende Achse die aktuelle Situation des Quittierungstimers QT darstellt. Die folgenden beiden Achsen zeigen entsprechend mehrere hintereinander ablaufende Retransmissionswartezeitintervalle △t_{RT} bzw. die aktuelle Situation des Retransmissionstimers RT. Im rechten Teil der Fig. 2-5 ist jeweils die Kommunikation zwischen Quell- und Zielrechner bzw. deren Anwendungsprogrammen dargestellt.

Fig. 2 stellt den Standardfall störungsfreier Kommunikation dar. Nachdem ein Datenpaket 10 zum Zeitpunkt t=0 vom Quellrechner zum Zielrechner ausgesendet worden ist und den Zielrechner bei 12 störungsfrei erreicht hat, wird es über einen zum Anwendungsprogramm des Zielrechners asynchron verlaufenden Mechanismus unter Steuerung des Echtzeitnetzprotokolls an das Anwendungsprogramm des Zielrechners bei 14 übergeben. Wiederum gesteuert durch das Echtzeitnetzprotokoll des Zielrechners wird - wie nach jedem Eintreffen eines Datenpakets beim Zielrechner - ein Quittungspaket 16 zum Quellrechner zurückgesendet, welches Daten enthält, die den Empfang des Datenpakets bestätigen.

In der Fig. 2 trifft das Quittungspaket innerhalb der Retransmissionswartezeit Δt_{RT} und wegen Δt_{RT}<Δt_{QT} auch innerhalb der Quittierungswartezeit beim Zielrechner ein, weshalb das Datenpaket nur einmal gesendet zu werden braucht. Beim Eintreffen 18 des Quittungspakets 16 erhält das Anwendungsprogramm des Quellrechners über einen asynchron zum Anwendungsprogramm verlaufenden Mechanismus die Meldung 20, daß die Quittung rechtzeitig, d.h. innerhalb der vorgegebenen Quittierungswartezeit empfangen wurde, und der blockierte Sendedatenpufferbereich wird ebenfalls asynchron zum Anwendungsprogramm wieder freigegeben, so daß er vom Anwendungsprogramm wieder benutzt werden kann. Schließlich werden die beiden Timer bei 22/24 freigegeben.

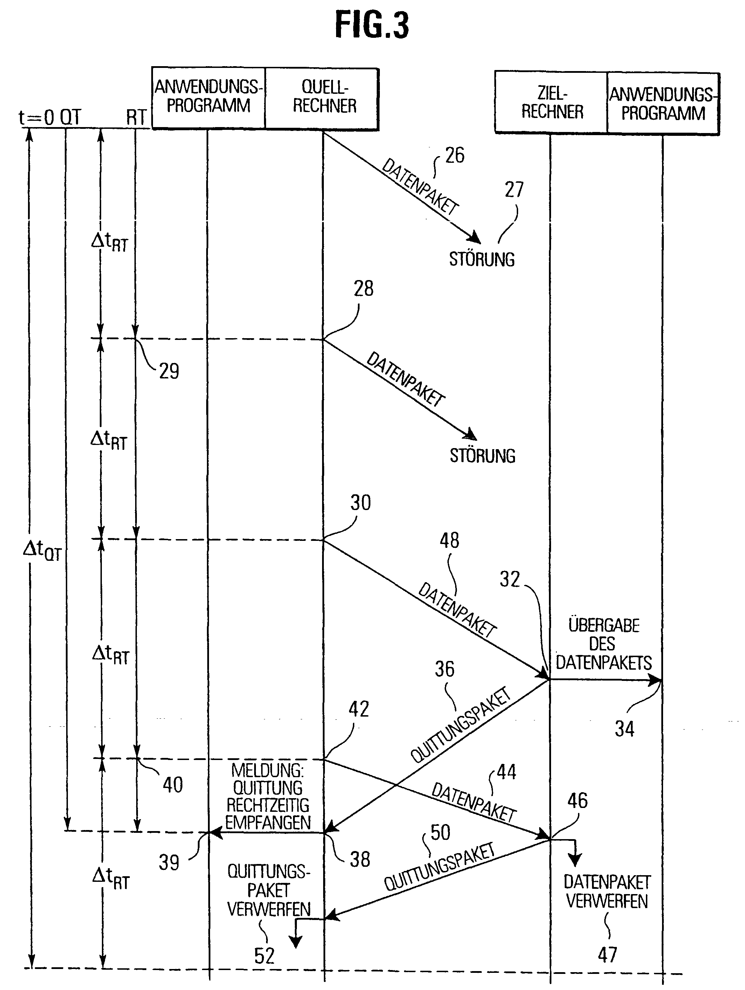

Die Fig. 3 zeigt einen Fall, bei dem analog zu dem oben beschriebenen Verfahren ein zum Zeitpunkt t=0 gesendetes Datenpaket 26 wegen einer Störung 27 nicht beim Zielrechner ankommt. Gesteuert durch das Echtzeitnetzprotokoll wird daraufhin nach Ablauf der Retransmissionswartezeit Δt_{RT} der Retransmissionstimer erneut gestartet und das sich immer noch im Sendedatenpufferbereich befindende Datenpaket, dessen Adresse sich das Echtzeitnetzprotokoll gemerkt hat, wird zum Zeitpunkt t=Δt_{RT} bei 28 erneut gesendet. Da die Übertragung erneut gestört ist, wiederholt sich der Vorgang und das Datenpaket wird zum Zeitpunkt t=2·Δt_{RT} bei 30 erneut gesendet. Dieses Mal erreicht es bei 32 den Zielrechner und wird wie oben beschrieben asynchron an das Anwendungsprogramm des Zielrechners bei 34 übergeben, allerdings trifft das zurückgesendete Quittungspaket 36 erst nach Ablauf der Retransmissionswartezeit △t_{RT} beim Quellrechner bei 38 ein und wird wie oben beschrieben als rechtzeitig empfangen bei 39 gemeldet, wobei die beiden Timer gestoppt werden. Daher wird zuvor, nach Ablauf der Zeitspanne Δt=3·Δt_{RT}, der Retransmissionstimer erneut gestartet 40 und das Datenpaket 44 bei 42 ein weiteres Mal zum Zielrechner gesendet.

Trifft dieses Datenpaket 44 beim Zielrechner bei 46 ein, so erkennt das erfindungsgemäße Verfahren anhand einer dem Datenpaket beim Senden angefügten Paketnummer, die hier derjenigen des bereits empfangenen Datenpakets 48 entspricht, daß es sich um ein Duplikat handelt und verwirft das Datenpaket bei 47. Das Echtzeitnetzprotokoll gibt nämlich jedem Datenpaket eine Paketnummer, die zu dessen Identifikation verwendet werden kann. Diese Paketnummer ist in einem Header-Block enthalten, den das Echtzeitnetzprotokoll dem zu sendenden Datenblock hinzufügt.

Sämtliche eintreffenden Datenpakete werden quittiert. Entspricht die Paketnummer des eingetroffenen Datenpakets der vom Echtzeitnetzprotokoll erwarteten Paketnummer, dann wird das Paket normal quittiert und die Daten werden an das Anwendungsprogramm übergeben. Die erwartete Paketnummer wird im Zielrechner anhand der letzten empfangenen und gespeicherten Paketnummer z.B. durch Inkrementierung der letzten empfangenen Paketnummer ermittelt. Entspricht die Paketnummer der zuletzt quittierten Paketnummer, dann wird nur quittiert und die Daten werden ignoriert. Auch bei allen anderen Paketnummern, die nicht der erwarteten Paketnummer entsprechen, werden die Daten ignoriert und das Paket wird quittiert. Hierbei kann vorzugsweise auch die Information mitgegeben werden, welche Paketnummer erwartet wurde.

Es wird in dem in der Fig. 3 dargestellten Fall demgemäß ein weiteres Quittungspaket 50 zum Quellrechner gesendet, da das Echtzeitnetzprotokoll des Zielrechners "nicht wissen kann", ob das bereits ausgesendete Quittungspaket 36 den Zielrechner erreicht hat. Trifft dieses weitere Quittungspaket 50 beim Quellrechner ein, so erkennt das Echtzeitnetzprotokoll, daß es sich um ein Duplikat handelt und verwirft 52 das Quittungspaket 50, ohne seinen Empfang dem Anwendungsprogramm zu melden. Das wird z.B. dadurch ermöglicht, daß dem Quittungspaket die jeweilige Paketnummer des durch das Quittungspaket bestätigten Datenpakets mitgegeben wird, so daß der Quellrechner Duplikate der Quittungspakete leicht erkennen kann.

Das Echtzeitnetzprotokoll des Quellrechners wertet nur Quittungspakete aus, die die momentan gültige Paketnummer enthalten. Trifft für ein gesendetes Datenpaket die erste Quittung rechtzeitig ein oder läuft der Quittierungstimer ab, dann wird das Anwendungsprogramm entsprechend informiert, wobei die nächste Paketnummer ermittelt wird und als momentan gültige Nummer gespeichert wird. Dadurch werden alle weiteren Quittungspakete für das ursprünglich gesendete Datenpaket automatisch ignoriert.

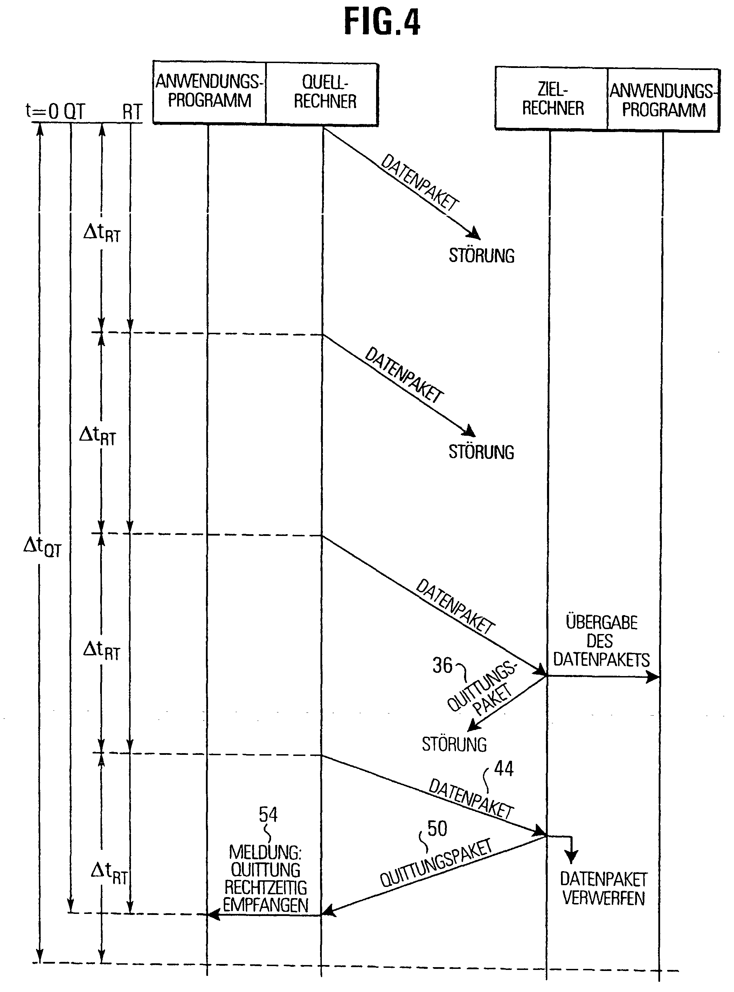

Fig. 4 zeigt eine leichte Abwandlung des in der Fig. 3 dargestellten Falls, wobei der Unterschied darin besteht, daß hier das erste Quittungspaket 36, das in den Fig. 3 und 4 das gleiche Bezugszeichen trägt, wegen einer Störung nicht beim Zielrechner ankommt. Daher wird die Meldung an das Anwendungsprogramm des Quellrechners, daß die Quittung innerhalb der Quittierungswartezeit Δt_{QT} empfangen wurde und damit das Quittungspaket rechtzeitig angekommen ist, erst nach erfolgreichem Empfang des zweiten vom Zielrechner aus gesendeten Quittungspakets 50 abgegeben 54. Dieser Fall zeigt deutlich, warum es wichtig ist, daß vom Zielrechner auch nach Empfang von Duplikaten des Datenpakets weitere Quittungspakete zum Quellrechner gesendet werden, um dem Quellrechner die Gewißheit zu geben, daß das Datenpaket innerhalb der vorherbestimmten Zeitbedingungen eingetroffen ist.

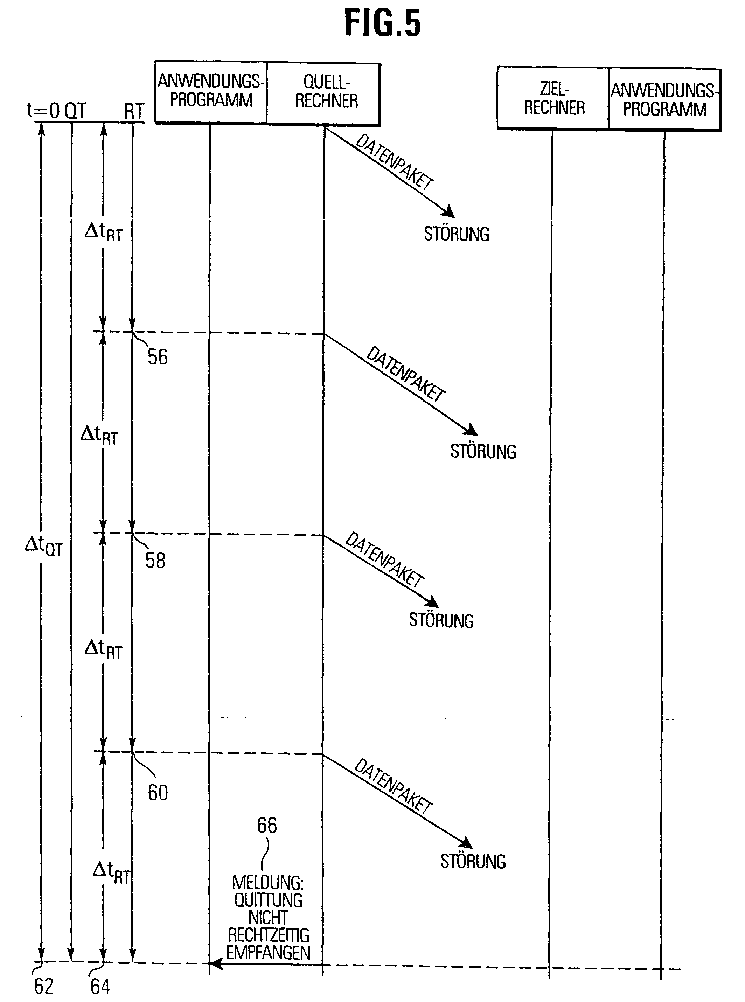

Fig. 5 zeigt schließlich einen Fall, bei dem wegen ständiger Störung der Übertragung des Datenpakets jeweils nach Ablauf der Retransmissionswartezeit Δt_{RT} zu den Zeitpunkten Δt_{RT}, 2·Δt_{RT} und 3·Δt_{RT} bei 56/58/60 erneut gesendet wird. Nach Ablauf der Quittierungswartezeit Δt_{QT} zum Zeitpunkt t=Δt_{QT} werden der Quittierungstimer und der Retransmissionstimer bei 62/64 gestoppt und freigegeben. Wiederum wird der Sendedatenpufferbereich über einen zum Anwendungsprogramm des Quellrechners asynchron verlaufenden Mechanismus freigegeben. Das Anwendungsprogramm des Quellrechners erhält bei 66 die Meldung, daß das Datenpaket nicht rechtzeitig, d. h. nicht innerhalb der Quittierungswartezeit Δt_{QT} quittiert wurde.

Die Kontrolle des Quittierungstimers und des Retransmissionstimers wird vorzugsweise so ausgeführt, daß nach Ablauf jeder Zeitbasiseinheit festgestellt wird, ob einer der beiden Timer abgelaufen ist.

Das Echtzeitnetzprotokoll des Quellrechners koordiniert das Senden so, daß ein Datenpaket erst dann abgeschickt wird, wenn das vorhergehende Datenpaket entweder quittiert worden ist oder wenn der entsprechende Quittierungstimer abgelaufen ist. Eventuell zwischenzeitlich von der Anwendung an das Echtzeitnetzprotokoll übergebene Datenpakete werden so lange in einer Warteschlange gehalten, bis sie gesendet werden können. Die Pakete werden in der Reihenfolge geschickt, wie sie von dem Anwendungsprogramm an das Echtzeitnetzprotokoll übergeben wurden.

Falls zwischen Quell- und Zielrechner mehrere Datenübertragungskanäle vorhanden sind, wird vor dem Senden ein freier Kanal ausgewählt und das Datenpaket dann über den selektierten Kanal zum Zielrechner gesendet. Die oben beschriebene Gewährleistung der Reihenfolge ist dabei jedoch zugunsten eines höheren Datendurchsatzes nicht mehr möglich.

Das geschilderte Verfahren eignet sich besonders für verteilte Echtzeitsysteme, bei denen ein echtzeitorientierter Datenaustausch zwischen Rechnern eines Netzwerks gesichert werden soll, die jeweils mit Echtzeit-Betriebssystemen arbeiten.

Wegen des Konzepts der zeitlich kontrollierten Quittungen kann sich ein datenaussendendes Programm darauf verlassen, daß die Zeitvorgaben für die Netzwerk-Datenübertragung eingehalten werden, solange keine Überschreitungen der Quittungswartezeiten gemeldet werden. Erfolgen solche Meldungen, so kann auf die Fehlersituation sofort reagiert und das System in einen sicheren Zustand versetzt werden, da das Anwendungsprogramm unmittelbar bei Auftreten der Meldung asynchron aktiviert wird. Da die Quittierungswartezeiten individuell für jedes Paket angegeben werden können, kann jedes Datenpaket je nach Situation unterschiedlich behandelt werden. Auch die Retransmissionswartezeit kann individuell für jedes Datenpaket eingestellt werden, so daß die Belastung des Systems und des Netzwerks individuell für jedes Paket eingestellt werden kann. Der Mechanismus zur Erzeugung der Zeitbasiseinheit ist ebenfalls frei wählbar. Dadurch kann eine an das jeweilige verteilte Echtzeitsystem angepaßte erforderliche Auflösung realisiert werden. Die Anforderungen an das Transportprotokoll sind so gewählt, daß einfache aber weit verbreitete Standard-Datagramm-Protokolle wie UDP/IP eingesetzt werden können. Dies gewährleistet, daß das erfindungsgemäße Verfahren in einer Vielzahl von Anwendungen auf einfache Art und Weise realisiert werden kann.

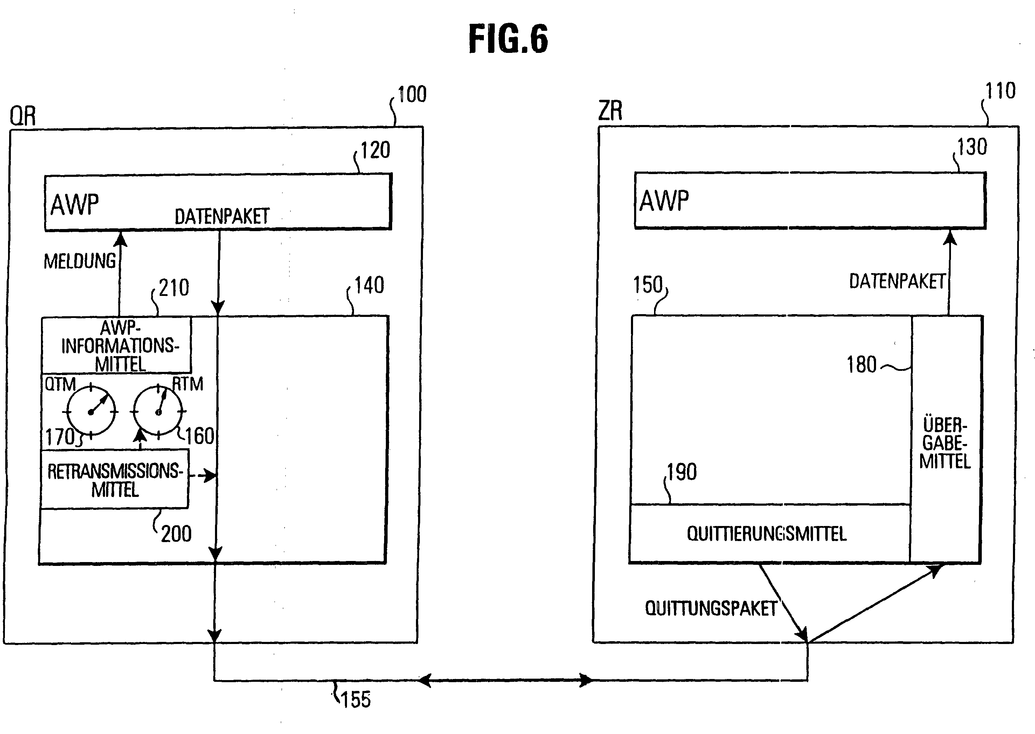

Die Fig. 6 zeigt die Elemente der einzelnen Rechner eines zur Durchführung des erfindungsgemäßen Systems geeigneten Rechnernetzwerks. Die Anwendungsprogramme der Rechner des Netzwerks sollen dabei über ein verbindungsloses und paketorientiertes Transportverfahren Datenpakete untereinander austauschen.

Die einzelnen Rechner können als Quellrechner (QR) oder als Zielrechner (ZR) fungieren. In der Fig. 6 ist links ein Quellrechner 100 und rechts ein Zielrechner 110 dargestellt. Beide sind über die Verbindung 155 miteinander verbunden. Sämtliche im Quellrechner dargestellten Elemente sollen auch im Zielrechner vorhanden sein und umgekehrt. Sie sind entsprechend ihren Funktionen der Übersichtlichkeit halber nur in jeweils einem der beiden Rechner dargestellt. Jeder Rechner umfaßt eine Echtzeiteinheit 140/150.

Jeder Rechner des Netzwerks enthält Retransmissionswartezeitüberwachungsmittel (RTM) 160, die dann, wenn der Rechner als Quellrechner (QR) fungiert, beim Senden eines Datenpakets vom Anwendungsprogramm (AWP) 120 des Rechners zum Anwendungsprogramm 130 eines als Zielrechner 110 fungierenden anderen Rechners des Netzwerks gestartet werden können, wobei sie dann die seit dem Senden des Datenpakets verstrichene Zeit messen und nach einer vorherbestimmten Retransmissionswartezeit ablaufen.

Ferner enhält jeder Rechner des Netzwerks Quittierungswartezeitüberwachungsmittel (QTM) 170, die dann, wenn der Rechner als Quellrechner fungiert, beim Senden eines Datenpakets vom Anwendungsprogramm 120 des Rechners zum Anwendungsprogramm 130 eines als Zielrechners fungierenden anderen Rechners des Netzwerks gestartet werden können, wobei sie dann die seit dem erstmaligen Senden des Datenpakets verstrichene Zeit messen und nach einer vorherbestimmten Quittierungswartezeit ablaufen.

Darüber hinaus umfaßt jeder Rechner des Netzwerks Übergabemittel 180, die nur beim Zielrechner 110 dargestellt sind und die dann, wenn der Rechner als Zielrechner fungiert, nach dem ersten Empfang eines Datenpakets das Paket an das Anwendungsprogramm des Rechners übergeben können.

Außerdem umfaßt jeder Rechner des Netzwerks Quittierungsmittel 190, die dann, wenn der Rechner als Zielrechner fungiert, nach jedem Empfang eines Datenpakets ein den Empfang bestätigendes Quittungspaket zum Quellrechner senden können, der das Datenpaket ausgesendet hat.

Darüber hinaus umfaßt jeder Rechner des Netzwerks Retransmissionmittel 200, die dann, wenn der Rechner als Quellrechner fungiert und der Empfang des Quittungspakets nach Ablauf der vorherbestimmten Retransmissionswartezeit nicht vom Rechner registriert worden ist, das Aussenden des Datenpakets zum Zielrechner und die Retransmissionswartezeitüberwachungsmittel 160 erneut starten können, was in der Fig. 6 beim Quellrechner 100 durch gestrichelte Linien mit Pfeilenden dargestellt ist.

Schließlich umfaßt jeder Rechner Anwendungsprogramminformationsmittel 210, die dann, wenn der Rechner als Quellrechner 100 fungiert und der Empfang des Quittungspakets nach Ablauf der vorherbestimmten Quittierungswartezeit im Rechner nicht registriert worden ist, das Anwendungsprogramm 120 des Rechners informieren können, daß der Empfang des ausgesendeten Datenpakets nicht innerhalb der Quittierungswartezeit quittiert wurde, und die dann, wenn der Empfang eines Quittungspakets innerhalb der vorherbestimmten Quittierungswartezeit im Rechner zum ersten Mal registriert wird, das Anwendungsprogramm 120 des Rechners informieren können, daß das Datenpaket innerhalb der Quittierungswartezeit quittiert wurde.

## Patentansprüche

1. Verfahren zum Datentransport zwischen Anwendungsprogrammen, die verschiedenen miteinander verbundenen Rechnern eines Rechnernetzwerks zugeordnet sind, wobei das Verfahren auf dem verbindungslosen und paketorientierten Transportprotokoll UDP/IP, das Datenpakete zwischen beliebigen Rechnern des Netzwerks zugeordneten Anwendungsprogrammen transportieren kann, aufbaut und bei dem Verfahren
- beim Senden eines Datenpakets vom Anwendungsprogramm (120) eines Quellrechners (100) zum Anwendungsprogramm (130) eines Zielrechners im Quellrechner ein nach einer vorherbestimmten Retransmissionswartezeit ablaufender Retransmissionstimer und ein nach einer vorherbestimmten Quittierungswartezeit ablaufender Quittierungstimer (170) gestartet werden;
- nach dem ersten Empfang des Datenpakets vom Zielrechner das Paket an das Anwendungsprogramm des Zielrechners übergeben wird;
- nach jedem Empfang des Datenpakets vom Zielrechner ein den Empfang bestätigendes Quittungspaket zum Quellrechner gesendet wird;
- immer dann, wenn der Empfang des Quittungspakets nach Ablauf der vorherbestimmten Retransmissionswartezeit nicht vom Quellrechner registriert worden ist, das Datenpaket erneut zum Zielrechner gesendet und der Retransmissionstimer erneut gestartet wird;
- dann, wenn der Empfang des Quittungspakets nach Ablauf der vorherbestimmten Quittierungswartezeit im Quellrechner nicht registriert worden ist, das Anwendungsprogramm des Quellrechners informiert wird, daß der Empfang des ausgesendeten Datenpakets nicht innerhalb der Quittierungswartezeit quittiert wurde; und
- dann, wenn der Empfang eines Quittungspakets innerhalb der vorherbestimmten Quittierungswartezeit im Quellrechner zum ersten Mal registriert wird, das Anwendungsprogramm des Quellrechners informiert wird, daß das Datenpaket innerhalb der Quittierungswartezeit quittiert wurde.

2. Verfahren nach Anspruch 1, bei dem die Quittierungswartezeit je nach den Zeiterfordernissen des Systems für jedes zu sendende Datenpaket individuell eingestellt wird.

3. Verfahren nach einem der Ansprüche 1 oder 2, bei dem die Retransmissionswartezeit für jedes zu sendende Datenpaket individuell eingestellt wird.

4. Verfahren nach einem der vorhergehenden Ansprüche, bei dem die Retransmissions- und Quittierungstimer im Quellrechner die gleiche Basiszeiteinheit aufweisen.

5. Verfahren nach Anspruch 4, bei dem der Systemtakt die Basiszeiteinheit bildet.

6. Verfahren nach Anspruch 4, bei dem die Basiszeiteinheit unabhängig vom Systemtakt ist und durch einen eigenen Zeitgeber definiert wird.

7. Verfahren nach einem der Ansprüche 4 bis 6, bei dem nach Ablauf jeder Basiszeiteinheit festgestellt wird, ob der Retransmissionstimer oder der Quittierungstimer abgelaufen ist.

8. Verfahren nach einem der vorhergehenden Ansprüche, bei dem, wenn mehrere Quittungspakete für das gleiche vom Quellrechner ausgesendete Datenpaket beim Quellrechner eintreffen, die nach Eintreffen des ersten Quittungspakets eintreffenden Quittungspakete verworfen werden.

9. Verfahren nach einem der vorhergehenden Ansprüche, bei dem, wenn das gesendete Datenpaket mehrfach beim Zielrechner eintrifft, die Duplikate verworfen werden.

10. Verfahren nach einem der vorhergehenden Ansprüche, bei dem im Quellrechner für das zu sendende Datenpaket ein Sendedatenpufferbereich des Anwendungsprogramms des Quellrechners vorgesehen ist, von dem aus das Datenpaket gesendet wird.

11. Verfahren nach Anspruch 10, bei dem das Datenpaket nach dem Senden zum Anwendungsprogramm des Zielrechners so lange in dem Sendedatenpufferbereich im Quellrechner verbleibt, bis das vom Zielrechner abgeschickte Quittungspaket beim Quellrechner eintrifft, wobei der Datenpufferbereich dann sofort und asynchron zum Anwendungsprogramm des Quellrechners für das Anwendungsprogramm des Quellrechners freigegeben wird.

12. Verfahren nach Anspruch 10 oder 11, bei dem der Sendedatenpufferbereich bei Ablauf des Quittierungstimers sofort freigegeben wird.

13. Verfahren nach einem der vorhergehenden Ansprüche, bei dem das Senden des Datenpakets asynchron zum Ablauf des Anwendungsprogramms des Quellrechners erfolgt.

14. Verfahren nach einem der vorhergehenden Ansprüche, bei dem das empfangene Datenpaket asynchron zum Ablauf des Anwendungsprogramm des Zielrechners an das Anwendungsprogramm des Zielrechners übergeben wird.

15. Verfahren nach einem der vorhergehenden Ansprüche, bei dem das Internetprotokoll IP auf einer Linkschicht aufbaut, die den Zugang zu einem die Rechner des Netzwerks verbindenden Übertragungsmedium gewährleistet.

16. Verfahren nach Anspruch 15, bei dem die Linkschicht eine Ethernet-Schicht ist.

17. Verfahren nach einem der vorhergehenden Ansprüche, bei dem zwischen Quell- und Zielrechner mehrere Datenübertragungskanäle vorhanden sind.

18. Verfahren nach Anspruch 17, bei dem vor dem Senden ein freier Kanal selektiert wird und das Datenpaket dann über den selektierten Kanal zum Zieirechner gesendet wird.

19. Verfahren nach einem der Ansprüche 1 bis 16, bei dem zwischen den Rechnern des Netzwerks nur ein einziger Datenübertragungskanal vorhanden ist.

20. Verfahren nach einem der Ansprüche 17 bis 19, bei dem sichergestellt ist, daß die innerhalb eines Kanals gesendeten Datenpakete in der gleichen Reihenfolge empfangen werden wie sie gesendet wurden.

21. Verfahren nach einem der vorhergehenden Ansprüche, bei dem die einzelnen Rechner des Netzwerks echtzeitorientiert arbeiten.

22. Verfahren nach Anspruch 21, bei dem die einzelnen Rechner jeweils mit einem Echtzeit-Betriebssystem arbeiten.

23. Verfahren nach einem der vorhergehenden Ansprüche, bei dem die Quittierungswartezeit länger als die Retransmissionswartezeit ist.

24. Rechnernetzwerk aus verschiedenen miteinander verbundenen Rechnern eines Rechnernetzwerks, die über das verbindungslose und paketorientierte Transportprotokoll UDP/IP Datenpakete zwischen beliebigen Rechnern des Netzwerks zugeordneten Anwendungsprogrammen austauschen können und bei dem jeder Rechner
- Retransmissionswartezeitüberwachungsmittel (160), die dann, wenn der Rechner als Quellrechner (100) fungiert, beim Senden eines Datenpakets vom Anwendungsprogramm (120) des Rechners zum Anwendungsprogramm (130) eines als Zielrechner (110) fungierenden anderen Rechners des Netzwerks gestartet werden können, wobei sie dann die seit dem Senden des Datenpakets verstrichene Zeit messen und nach einer vorherbestimmten Retransmissionswartezeit ablaufen;
- Quittierungswartezeitüberwachungsmittel (170), die dann, wenn der Rechner als Quellrechner fungiert, beim Senden eines Datenpakets vom Anwendungsprogramm des Rechners zum Anwendungsprogramm eines als Zielrechners fungierenden anderen Rechners des Netzwerks gestartet werden können, wobei sie dann die seit dem erstmaligen Senden des Datenpakets verstrichene Zeit messen und nach einer vorherbestimmten Quittierungswartezeit ablaufen;
- Mittel (180), die dann, wenn der Rechner als Zielrechner fungiert, nach dem ersten Empfang eines Datenpakets das Paket an das Anwendungsprogramm des Rechners übergeben können;
- Mittel (190), die dann, wenn der Rechner als Zielrechner fungiert, nach jedem Empfang eines Datenpakets ein den Empfang bestätigendes Quittungspaket zum Quellrechner senden können, derdas Datenpaket ausgesendet hat;
- Mittel (200), die dann, wenn der Rechner als Quellrechner fungiert und der Empfang des Quittungspakets nach Ablauf der vorherbestimmten Retransmissionswartezeit nicht vom Rechner registriert worden ist, das Aussenden des Datenpakets zum Zielrechner und die Retransmissionswartezeitüberwachungsmittel erneut starten können; und
- Mittel (210) umfaßt, die dann, wenn der Rechner als Quellrechner fungiert und der Empfang des Quittungspakets nach Ablauf der vorherbestimmten Quittierungswartezeit im Rechner nicht registriert worden ist, das Anwendungsprogramm des Rechners informieren können, daß der Empfang des ausgesendeten Datenpakets nicht innerhalb der Quittierungswartezeit quittiert wurde, und die dann, wenn der Empfang eines Quittungspakets innerhalb der vorherbestimmten Quittierungswartezeit im Rechner zum ersten Mal registriert wird, das Anwendungsprogramm des Rechners informieren können, daß das Datenpaket innerhalb der Quittierungswartezeit quittiert wurde.

## Claims

1. A method for transporting data between application programs assigned to different interconnected computers of a computer network, the method being based on the connectionless and packet-oriented transport protocol UDP/IP, which is capable of transporting data packets between any computers of said network, and comprising the steps:
- initiating a retransmission timer timing out after a predetermined retransmission waiting period and an acknowledgement timer (170) timing out after a predetermined acknowledgement waiting period when a data packet is transmitted from the application program (120) of a source computer (100) to the application program (130) of a destination computer,
- transferring the data packet, after it has been initially received by the destination computer, to the application program of the destination computer,
- transmitting an acknowledgement packet to the source computer, each time the destination computer receives a data packet, to confirm receipt of the data packet,
- retransmitting the data packet to the destination computer and reinitiating the retransmission timer in the event that receipt has still not been registered on timeout of the predetermined retransmission waiting period,
- informing the application program of the source computer that receipt of the data packet has not been acknowledged within the acknowledgement waiting period if receipt of the acknowledgement packet has still not been registered on timeout of the predetermined acknowledgement waiting period in the source computer;
and
- informing the application program of the source computer that the data packet has been acknowledged within the acknowledgment waiting period if receipt of an acknowledgement packet within the predetermined acknowledgement waiting period in the source computer is registered for the first time.

2. The method as set forth in claim 1 wherein said acknowledgement waiting period is set individual for each data packet to be transmitted, depending on the system timing requirements.

3. The method as set forth in claim 1 or 2 wherein said retransmission waiting period is set individual for each data packet to be transmitted.

4. The method as set forth in any of the preceding claims wherein said retransmission and acknowledgement timers in said source computer comprise the same basic time unit.

5. The method as set forth in claim 4 wherein the system clock forms said basic time unit.

6. The method as set forth in claim 4 wherein said basic time unit is independent of said system clock and is defined by a seperate timer.

7. The method as set forth in any of the claims 4 to 6 wherein on timeout of each basic time unit it is established whether said retransmission timer or said acknowledgement timer has timed out.

8. The method as set forth in any of the preceding claims wherein if several acknowledgement packets arrive at said source computer for said same data packet sent by said source computer, the acknowledgement packets arriving after arrival of the first acknowledgement packets are rejected.

9. The method as set forth in any of the preceding claims wherein if said transmitted data packet arrives at said destination computer multiply, the duplicates are rejected.

10. The method as set forth in any of the preceding claims wherein a transmission data buffer area of said application program of said source computer is provided in said source computer for said data packet to be transmitted, said source computer being that from which said data packet is transmitted.

11. The method as set forth in claim 10 wherein after transmission to said application program of said destination computer said data packet remains in said transmission data buffer area in said source computer until said acknowledgment packet sent by said destination computer arrives at said source computer, said data buffer area then being instantly released and asynchronous to said application program of said source computer for said application program of said source computer.

12. The method as set forth in claim 10 or 11 wherein said transmission data buffer area is instantly released on timeout of said acknowledgement timer.

13. The method as set forth in any of the preceding claims wherein transmission of said data packet occurs asynchronous to timeout of said application program of said source computer.

14. The method as set forth in any of the preceding claims wherein the received data packet is transferred to said application program of said destination computer asynchronous to timeout of said application program of said destination computer.

15. The method as set forth in any of the preceding claims wherein the internet protocol IP is based on a link layer ensuring access to a transport medium connecting the computers of the network.

16. The method as set forth in claim 15 wherein said link layer is an Ethernet layer.

17. The method as set forth in any of the preceding claims wherein between source computer and destination computer several data transport channels are provided.

18. The method as set forth in claim 17 wherein prior to transmission a vacant channel is selected and said data packet is then transmitted via said selected channel to said destination computer.

19. The method as set forth in any of the claims 1 to 16 wherein between said computers of said network only a single data transport channel is provided.

20. The method as set forth in any of the claims 17 to 19 wherein it is assured that said data packets transmitted within a channel are received in the same sequence as they were transmitted.

21. The method as set forth in any of the preceding claims wherein said individual computers of said network work real-time oriented.

22. The method as set forth in claim 23 wherein said individual computers each work with a real-time operating system.

23. The method as set forth in any of the preceding claims wherin said acknowledgement waiting period is longer than said retransmission waiting period.

24. A computer network comprising different interconnected computers of a computer network which are capable of swapping data packets between any computers of the network via the connectionless and packet-oriented transport protocol UDP/IP , each computer comprising:
- means (160) for monitoring the retransmission waiting period capable of being initiated when the computer, functioning as a source computer (100), sends a data packet from the application program (120) of the computer to the application program (130) of another computer functioning as the destination computer (110) of the network, the means then sensing the time having passed since transmission of said data packet and timing out after a predetermined retransmission waiting period;
- means (170) for monitoring the acknowledgement waiting period capable of being initiated when the computer, functioning as a source computer, sends data packet from the application program of the computer to the application program of another computer functioning as the destination computer of the network, the means then sensing the time having passed since initial transmission of the data packet and timing out after a predetermined acknowledgement waiting period;
- means (180) capable of transferring the packet to the application programm of the computer after initial receipt of a data packet when said computer functions as a destination computer;
- means (190) capable of transmitting an acknowledgement packet confirming receipt to the source computer, having transmitted the data packet, every time a data packet is received, when said computer functions as a destination computer;
- means (200) capable of reinitiating the transmission of the data packet to the destination computer and the means for monitoring the acknowledgement waiting period when the computer functions as a source computer and receipt of the acknowledgement packet has not been registered by the computer on timeout of the predetermined retransmission waiting period and
- means (200) capable of informing the application program of the computer - when the computer functions as a source computer and receipt of the acknowledgement packet has not been registered by the computer - that receipt of the transmitted data packet was not acknowledged within the acknowledgement waiting period, and which are capable of informing the application program of said computer that the data packet was acknowledged within the acknowledgement waiting period when receipt of an acknowledgement packet is initially registered within the predetermined acknowledgement waiting period in said computer.

## Revendications

1. Procédé pour le transport de données entre des programmes d'application, qui sont associés à différents ordinateurs reliés entre eux d'un réseau d'ordinateurs, selon lequel le procédé est établi sur le protocole de transport sans liaison et orienté paquet UDP/IP, qui peut transporter des paquets de données entre des programmes d'application associés à des ordinateurs quelconques du réseau, et selon lequel
- lors de l'émission d'un paquet de données par le programme d'application (120) d'un ordinateur d'origine (100) au programme d'application (130) d'un ordinateur de destination dans l'ordinateur d'origine, une minuterie de retransmission, qui fonctionne après un temps d'attente de retransmission déterminé au préalable, et une minuterie d'accusé de réception (170) qui fonctionne au bout d'un temps d'attente d'accusé de réception déterminé au préalable, démarrent;
- après la première réception du paquet de données par l'ordinateur de destination le paquet est transféré au programme d'application de l'ordinateur de destination;
- après chaque réception du paquet de données par l'ordinateur de destination, un paquet d'accusé de réception, qui confirme la réception, est envoyé à l'ordinateur d'origine;
- chaque fois que la réception du paquet d'accusé de réception n'a pas été enregistrée par l'ordinateur d'origine après l'écoulement d'un temps d'attente de retransmission déterminé au préalable, le paquet de données est émis à nouveau en direction de l'ordinateur de destination et la minuterie de retransmission démarre à nouveau;
- lorsque la réception du paquet d'accusé de réception n'a pas été enregistrée dans l'ordinateur d'origine après l'écoulement d'un temps d'attente d'accusé de réception déterminé au préalable, le programme d'application de l'ordinateur d'origine est informé du fait qu'il n'a pas été accusé réception du paquet de données émis au cours du temps d'attente d'accusé de réception; et
- lorsque la réception d'un paquet d'accusé de réception est enregistrée pour la première fois au cours du temps d'attente d'accusé de réception déterminé par avance dans l'ordinateur d'origine, le programme d'application de l'ordinateur d'origine est informé du fait qu'il a été accusé réception du paquet de données au cours du temps d'attente d'accusé de réception.

2. Procédé selon la revendication 1, selon lequel le temps d'attente d'accusé de réception est réglé individuellement en fonction des exigences du point de vue temps du système pour chaque paquet de données à émettre.

3. Procédé selon l'une des revendications 1 ou 2, selon lequel le temps d'attente de retransmission est réglé individuellement pour chaque paquet de données à émettre.

4. Procédé selon l'une des revendications précédentes, selon lequel la minuterie de retransmission et la minuterie d'accusé de réception situées dans l'ordinateur d'origine possèdent la même unité de temps de base.

5. Procédé selon la revendication 4, selon lequel la cadence du système forme l'unité de temps de base.

6. Procédé selon la revendication 4, selon lequel l'unité de temps de base est indépendante de la cadence du système et est définie par une unité propre de délivrance de base de temps.

7. Procédé selon l'une des revendications 4 à 6, selon lequel après l'écoulement de chaque unité de temps de base, une détermination est faite pour savoir si la minuterie de retransmission ou la minuterie d'accusé de réception a achevé son temps de comptage.

8. Procédé selon l'une des revendications précédentes, selon lequel, lorsque plusieurs paquets d'accusé de réception arrivent dans l'ordinateur d'origine pour le même paquet de données émis par l'ordinateur d'origine, les paquets d'accusé de réception arrivant après l'arrivée du premier paquet d'accusé de réception sont rejetés.

9. Procédé selon l'une des revendications précédentes, selon lequel, lorsque le paquet de données émis arrive plusieurs fois dans l'ordinateur de destination, les doubles sont rejetés.

10. Procédé selon l'une des revendications précédentes, selon lequel, dans l'ordinateur d'origine pour le paquet de données à émettre, il est prévu une zone tampon de données d'émission du programme d'application de l'ordinateur d'origine, à partir de laquelle le paquet de données est émis.

11. Procédé selon la revendication 10, selon lequel après son émission en direction du programme d'application de l'ordinateur de destination, le paquet de données subsisté dans la zone tampon de données d'émission dans l'ordinateur d'origine, jusqu'à ce que le paquet d'accusé de réception envoyé par l'ordinateur de destination arrive dans l'ordinateur d'origine, la zone tampon de données étant alors libérée immédiatement et d'une manière asynchrone par rapport au programme d'application de l'ordinateur d'origine pour le programme d'application de l'ordinateur d'origine.

12. Procédé selon la revendication 10 ou 11, selon lequel la zone tampon de données d'émission est immédiatement libérée lorsque la durée de la minuterie d'accusé de réception est écoulée.

13. Procédé selon l'une des revendications précédentes, selon lequel l'émission du paquet de données s'effectue d'une manière asynchrone par rapport au déroulement du programme d'application de l'ordinateur d'origine.

14. Procédé selon l'une des revendications précédentes, selon lequel le paquet de données reçu est transféré au programme d'application de l'ordinateur de destination, d'une manière asynchrone par rapport au déroulement du programme d'application de l'ordinateur de destination.

15. Procédé selon l'une des revendications précédentes, selon lequel le protocole Internet IP est établi sur une couche de liaison, qui garantit l'accès à un milieu de transmission qui relie les ordinateurs du réseau.

16. Procédé selon la revendication 15, selon lequel la couche de liaison est une couche Ethernet.

17. Procédé selon l'une des revendications précédentes, selon lequel plusieurs canaux de transmission de données sont présents entre l'ordinateur d'origine et l'ordinateur de destination.

18. Procédé selon la revendication 17, selon lequel avant l'émission, un canal libre est sélectionné et le paquet de données ést alors envoyé à l'ordinateur de destination par l'intermédiaire du canal sélectionné.

19. Procédé selon l'une des revendications 1 à 16, selon lequel un seul canal de transmission de données est présent entre les ordinateurs du réseau.

20. Procédé selon l'une des revendications 17 à 19, selon lequel il est garanti que les paquets de données émis à l'intérieur d'un canal sont reçus selon la même séquence que celle avec laquelle ils ont été émis.

21. Procédé selon l'une des revendications précédentes, selon lequel les différents ordinateurs du réseau travaillent suivant un mode en temps réel.

22. Procédé selon la revendication 21, selon lequel les différents ordinateurs travaillent respectivement avec un système d'exploitation en temps réel.

23. Procédé selon l'une des revendications précédentes, selon lequel le temps d'attente d'accusé de réception est plus long que le temps d'attente de retransmission.

24. Réseau d'ordinateurs constitué par différents ordinateurs reliés entre eux d'un réseau d'ordinateurs, qui peuvent échanger des paquets de données, au moyen du protocole de transport sans liaison et d'une manière orienté paquet UDP/IP, entre des programmes d'application associés à des ordinateurs quelconques du réseau, et dans lequel chaque ordinateur
- comporte des moyens (160) de contrôle du temps d'attente de retransmission qui, lorsque l'ordinateur fonctionne en tant que l'ordinateur d'origine (100), peuvent être démarrés lors de l'émission d'un paquet de données depuis le programme d'application (120) de l'ordinateur en direction du programme d'application (130) d'un autre ordinateur du réseau fonctionnant en tant qu'ordinateur de destination (110), les moyens de contrôle mesurant alors le temps qui s'est écoulé depuis l'émission du paquet de données et s'arrêtant après un temps d'attente de retransmission déterminé par avance;
- des moyens (170) de contrôle du temps d'attente d'accusé de réception qui, lorsque l'ordinateur fonctionne en tant qu'ordinateur d'origine, peuvent être démarrés lors de l'émission d'un paquet de données depuis le programme d'application de l'ordinateur en direction du programme d'application d'un autre ordinateur du réseau fonctionnant en tant qu'ordinateur de destination, des moyens de contrôle mesurant le temps qui s'est écoulé depuis la première émission du paquet de données et s'arrêtant après un temps d'attente d'accusé de réception déterminé par avance;
- des moyens (180) qui, lorsque l'ordinateur fonctionne en tant qu'ordinateur de destination, peuvent transférer le paquet au programme d'application de l'ordinateur après la première réception d'un paquet de données;
- des moyens (190) qui, lorsque l'ordinateur fonctionne en tant qu'ordinateur de destination, peuvent émettre après chaque réception d'un paquet de données un paquet d'accusé de réception confirmant la réception, en direction de l'ordinateur d'origine, qui a émis le paquet de données;
- des moyens (200) qui, lorsque l'ordinateur fonctionne en tant qu'ordinateur d'origine et que la réception du paquet d'accusé de réception n'a pas été enregistrée par l'ordinateur après l'écoulement du temps d'attente de retransmission déterminé au préalable, peuvent faire démarrer à nouveau l'émission du paquet de données en direction de l'ordinateur de destination et des moyens de contrôle du temps d'attente de retransmission; et
- des moyens (210) qui, lorsque l'ordinateur fonctionne en tant qu'ordinateur d'origine et que la réception du paquet de l'accusé de réception n'a pas été enregistrée dans l'ordinateur après l'écoulement de l'intervalle de temps d'accusé de réception déterminé au préalable, peuvent informer le programme d'application de l'ordinateur du fait qu'il n'y a pas eu d'accusé de réception du paquet de données émis au cours du temps d'attente d'accusé de réception, et qui, lorsque la réception d'un paquet d'accusé de réception a été enregistrée pour la première fois dans l'ordinateur au cours du temps d'attente d'accusé de réception déterminé au préalable, peuvent informer le programme d'application de l'ordinateur qu'un accusé de réception a été délivré pour le paquet de données au cours du temps d'attente d'accusé de réception.
